# EUROPÄISCHE PATENTSCHRIFT

(11) **EP 1 377 170 B1**
(45) Veröffentlichungstag und Bekanntmachung des Hinweises auf die Patenterteilung: **29.12.2004**
(21) Anmeldenummer: 02742879.6
(22) Anmeldetag: 08.04.2002
(51) Int. Cl.: A22B 1/00

(54) **BETÄUBUNGSBOX FÜR RINDER UND VERFAHREN ZUM BETÄUBEN UND TÖTEN VON RINDERN**
STUNNING BOX FOR CATTLE AND METHOD FOR STUNNING AND KILLING CATTLE
ENCEINTE D'ETOURDISSEMENT POUR BOVINS, ET PROCEDE PERMETTANT L'ETOURDISSEMENT ET L'ABATTAGE DE BOVINS

(30) Priorität: 09.04.2001 DE 10117691
(43) Veröffentlichungstag der Anmeldung: 07.01.2004
(73) Patentinhaber: Banss Schlacht- und Fördertechnik GmbH, 35216 Biedenkopf (DE)
(72) Erfinder: WEIDE, Harald, 35216 Biedenkopf (DE)
(74) Vertreter: Klunker . Schmitt-Nilson . Hirsch
(86) Internationale Anmeldenummer: PCT/EP2002/003888
(87) Internationale Veröffentlichungsnummer: WO 2002/080687

(56) Entgegenhaltungen:
- EP-A- 0 743 004
- DE-A- 3 922 729
- DE-A- 4 101 249
- DE-C- 265 661
- DE-C- 4 320 966
- DE-U- 29 606 486
- FR-A- 2 614 762
- US-A- 4 748 719
- US-A- 5 704 830

## Beschreibung

Die Erfindung bezieht sich, nach einem ersten Aspekt, auf eine Betäubungsbox für große Schlachttiere, insbesondere Rinder. Aus der FR 2614762 ist eine Betäubungsbox für große Schlachttiere bekannt.

Die heute gängigste Art, Rinder zu betäuben, erfogt durch Bolzenschuss in den Kopf, während das Rind in einer Box steht. Dann wird eine Wand der Box geöffnet, das betäubte Rind an einem Hinterbein angeschlungen und dann angehoben. Am kopfuntenhängenden Rind wird dann die Halsschlagader geöffnet. - Ferner ist es grundsätzlich bekannt, Rinder mittels elektrischem Strom zu betäuben.

Der Erfindung liegt das technische Problem zugrunde, ein Verfahren und eine Vorrichtung für das Betäuben und anschließende Töten von großen Schlachttieren verfügbar zu machen, welche(s) für das Schlachthofpersonal besonders rationell ist und unter dem Gesichtspunkt guter und gesunder Fleischqualität besonders gute Ergebnisse liefert.

Gemäß einer ersten Lösung dieses technischen Problems ist die Betäubungsbox erfindungsgemäß dadurch gekennzeichnet, dass sie eine stationäre Basis und ein Tieraufnahmemodul aufweist, welches um eine Längsachse drehbar auf der Basis gelagert ist und - im aufrechten Zustand - einen Boden, auf den ein zu betäubendes Schlachttier laufen kann, und eine erste Seitenwand aufweist; und dass eine zweite Seitenwand der Betäubungsbox gesondert von dem Tieraufnahmemodul vorgesehen ist.

Diese erfindungsgemäße Betäubungsbox verwirklicht die Konzeption, dass das Tieraufnahmemodul anfangs in aufrechtem Zustand ist, so dass ein zu betäubendes Schlachttier bequem in die Betäubungsbox hineinlaufen kann, dass mit elektrischem Strom betäubt wird, was im Vergleich zu dem bisher am meisten üblichen Betäuben mittels Bolzenschuss eine Reihe von später noch abzuhandelnden Vorteilen hat, und dass das betäubte Schlachttier innerhalb extrem kurzer Zeit nach Beginn des Stromflusses für elektrische Betäubung äußerst bequem aus der Betäubungsbox herausgehoben werden kann, weil nach dem Drehen der Betäubungsbox um eine Längsachse die Betäubungsbox gleichsam oben offen vor der Bedienungsperson liegt.

In den meisten Fällen wird man vorsehen, dass die zweite Seitenwand der Betäubungsbox stationär ist, vorzugsweise an der Basis der Betäubungsbox oder direkt auf dem Schlachthofboden befestigt ist. Es wird jedoch ausdrücklich darauf hingewiesen, dass hiermit durch die Erfindung auch offenbart wird, die zweite Seitenwand der Betäubungsbox alternativ zum mitdrehbaren Bestandteil des Tieraufnahmemoduls zu machen und vorzusehen, dass die zweite Seitenwand schwenkend oder translatorisch relativ zu dem Tieraufnahmemodul bewegbar ist, so dass auf diese Weise ein großräumiger Zugang zum Inneren des Tieraufnahmemoduls zum Wegheben des Betäubten und ggf. getöteten Schlachttiers geöffnet wird.

Gemäß einer zweiten Lösung des genannten technischen Problems ist die Betäubungsbox erfindungsgemäß dadurch gekennzeichnet, dass die Betäubungsbox einen Boden, auf den ein zu betäubendes Schlachttier laufen kann, und zwei Seitenwände aufweist; dass ein unterer Kopfhalter zum Abstützen des Schlachttierkopfes von unten her vorgesehen ist; und dass ein schwenkend oder translatorisch aufwärts und abwärts bewegbarer, oberer Kopfhalter vorgesehen ist, der zwei Elektroden für elektrisches Betäuben beinhaltet.

Die Betäubungsbox gemäß zweiter Lösung ist somit ebenfalls für elektrisches Betäuben vorgesehen. Sie zeichnet sich durch eine neuartige Art des Fixierens des Schlachttierkopfes und des In-Position-Bringens der Elektroden aus. Es wird betont, dass die zweite Lösung mit der ersten Lösung kombiniert vorgesehen sein kann.

Vorzugsweise ist der untere Kopfhalter schwenkend oder translatorisch aufwärts und abwärts oder seitwärts bewegbar. Das weiter unten zu beschreibende Ausführungsbeispiel wird anschaulich vor Augen führen, dass hiermit außer dem Vorteil der besonders guten Schlachttierkopffixierung der Vorteil einer besonders bequemen Freigabe des Schlachttierkopfes vorzugsweise zum Töten des Schlachttiers durch Öffnen der Halsschlagader und/oder zum Wegheben des Schlachttiers einhergeht.

Vorzugsweise sind der untere Kopfhalter und der obere Kopfhalter - in Seitenansicht der Betäubungsbox betrachtet - an einer Stelle vorgesehen, die nahe einer Vorderwand der Betäubungsbox ist, so dass beim Betäuben der Kopf des Schlachttiers vorne aus der Betäubungsbox herausragt. Alternativ kann man die Betäubungsbox so lang machen, dass der Schlachttierkopf im Inneren der Betäubungsbox ist. In diesem Fall muss man den unteren und den oberen Kopfhalter naturgemäß ein Stück zurückgesetzt gegenüber der Vorderwand der Betäubungsbox vorsehen.

Nach einer dritten Lösung des genannten technischen Problems ist die Betäubungsbox dadurch gekennzeichnet, dass ein Bauchunterstützungselement vorgesehen ist, welches schwenkend oder translatorisch in Unterstützungsposition bei einem zu betäubenden Schlachttier bringbar ist.

Erfindungsgemäß wurde herausgefunden, dass es nachteilig ist, wenn ein Schlachttier wegen der Betäubung und der hieraus resultierenden Muskelentspannung in der Betäubungsbox zusammensackt. Es ist für das Töten des Schlachttiers und das Wegheben des Schlachttiers aus der Betäubungsbox wesentlich günstiger, wenn das Schlachttier einen nicht zusammengesackten Zustand hat. Es wird betont, dass die dritte Lösung sowohl mit der ersten Lösung als auch mit der zweiten Lösung als auch in Dreierkombination zusammen mit der ersten und der zweiten Lösung verwirklicht sein kann.

Nach einer vierten Lösung des angegebenen technischen Problems ist die Betäubungsbox erfindungsgemäß dadurch gekennzeichnet, dass eine Herzelektrode oder ein Paar von Herzelektroden vorgesehen ist.

Es ist neuartig, bei großen Schlachttieren, insbesondere Rindern, mit der sogenannten Herzbetäubung zu arbeiten. Bei der Erfindung wird vorzugsweise mit einer Kombination von Hirnbetäubung und Herzbetäubung gearbeitet, wie weiter unten noch deutlicher werden wird.

Es wird betont, dass die vierte Lösung sowohl mit der ersten Lösung allein, als auch mit der zweiten Lösung allein, als auch mit der dritten Lösung allein, als auch in Kombination mit einer Kombination aus erster und zweiter Lösung, als auch in Kombination mit einer Kombination aus erster und dritter Lösung, als auch in Kombination mit einer Kombination aus zweiter und dritter Lösung, als auch in Kombination mit einer Kombination aus erster und zweiter und dritter Lösung verwirklichbar ist.

Vorzugsweise ist (sind) die Herzelektrode(n) schwenkend oder translatorisch in Berührung mit einem zu betäubenden Schlachttier bringbar.

Durch die angesprochene Bewegbarkeit des Bauchunterstützungselements und/oder der Herzelektrode(n) lässt sich erreichen, dass diese Bauteile beim Hineingehen eines zu betäubenden Schlachttierts in die Betäubungsbox nicht im Wege sind, aber dann, sobald das Schlachttier seine Position in der Betäubungsbox erreicht hat, seinerseits (ihrerseits) in Position bringbar ist (sind).

Es wird betont, dass das Bauchunterstützungselement und die Herzelektrode(n) auch als kombiniertes Bauteil vorgesehen sein können und vorzugsweise in einem gemeinsamen Bewegungsvorgang in Position bringbar sind.

Vom konstruktiven Aufbau her ist die Betäubungsbox vorzugsweise so aufgebaut, dass das Tieraufnahmemodul eine vordere Tragplatte und eine hintere Tragplatte aufweist; dass sich jede der beiden Tragplatten quer zu einer Längsachse der Betäubungsbox erstreckt; dass jede der Tragplatten mindestens auf einer Teillänge ihres Randes kreisbogenförmig gerundet ist; und dass mindestens die hintere Tragplatte eine sektorartige Ausnehmung aufweist. Diese sektorartige Ausnehmung schafft gleichsam eine Durchtrittsöffnung genügender Größe für den Zugang des jeweils zu betäubenden Schlachttiers.

Nach einem zweiten Aspekt bezieht sich die Erfindung auf ein Verfahren zum Betäuben und Töten großer Schlachttiere, insbesondere Rinder,
dadurch gekennzeichnet, dass das jeweilige Schlachttier in eine Box gebracht wird;
dass mittels zwei Kopfelektroden eine Hirnbetäubung des Schlachttiers mit Strom durchgeführt wird;
dass teilweise zeitlich überlappend mit der Hirnbetäubung oder danach mittels einer Herzelektrode und mindestens einer Kopfelektrode oder mittels zwei Herzelektroden eine Herzbetäubung des Schlachttiers mit Strom durchgeführt wird;
dass vor Beendigung des Stromdurchgangs für die Herzbetäubung die Box um eine Längsachse gedreht wird, so dass das Schlachttier auf einer ersten Seitenwand der Box liegt;
und dass dem Schlachttier, während es in der Box liegt, zum Töten ein Blutgefäß geöffnet wird.

Dieses erfindungsgemäße Verfahren stellt ebenfalls eine Lösung des weiter vorn genannten technischen Problems dar. Es wird betont, dass dieses Verfahren vorzugsweise in einer Betäubungsbox gemäß erster Lösung und/oder gemäß zweiter Lösung und/oder gemäß dritter Lösung und/oder gemäß vierter Lösung durchgeführt wird.

Das in den zwei vorhergehenden Absätzen offenbarte Verfahren kann in zweifacher Hinsicht abgeändert werden: Die Box wird erst nach Beendigung des Stromdurchgangs für die Herzbetäubung um die Längsachse gedreht und/oder dem Schlachttier wird, während es sich in der noch ungedrehten Box befindet, zum Töten ein Blutgefäß geöffnet.

In bevorzugter Weiterbildung des erfindungsgemäßen Verfahrens wird das Blutgefäß des Schlachttiers geöffnet, während noch der Herzbetäubungsstrom fließt. Bei Nutzung dieser ganz besonders bevorzugten Weiterbildung ist man in optimalem, extrem kurzem zeitlichen Abstand von dem Beginn der Herzbetäubung (und auch von dem Beginn der Hirnbetäubung); das betäubte Tier kann nach dem Ende des Fließens des Betäubungsstroms sicherlich nicht wieder das Bewusstsein erlangen.

Alternativ ist es möglich, das Blutgefäß des Schlachttieres nach, vorzugsweise kurz nach, Beendigung des Fliessens des Herzbetäubungsstroms zu öffnen.

Vorzugsweise wird vor dem Beginn der Hirnbetäubung oder vor dem Beginn der Herzbetäubung ein Bauchunterstützungselement in Position gebracht. Vorzugsweise werden die zwei auf Elektroden durch Heranbewegen eines Kopfhalters mit beinhalteten Kopfelektroden in Position gebracht. Die Vorteile der Benutzung eines bewegbaren Bauchunterstützungselements und/oder eines bewegbaren Kopfhalters mit Kopfelektroden sind schon weiter vorn geschildert worden.

Vorzugsweise wird bei der Herzbetäubung mit niedrigerer Stromfrequenz gearbeitet als bei der Hirnbetäubung. Vorzugsweise wird bei der Herzbetäubung mit niedrigerer Stromstärke gearbeitet als bei der Hirnbetäubung. Es hat sich bei den Arbeiten an der Erfindung gezeigt, dass diese Weiterbildungen einzeln oder in Kombination zu besonders tierschonender, aber tiefer Betäubung und zu besonders wenigen Schlachtschäden, insbesondere durch das Platzen kleiner Blutgefäße, führt.

Elektrische Hirnbetäubung löst beim zu betäubenden Schlachttier eine Art epileptischen Anfall aus; das Schlachttier verliert die Besinnung, ist aber noch nicht tief betäubt. Die elektrische Herzbetäubung führt zu Herzkammerflimmern und damit zu der tiefen Betäubung, wie sie für das anschließende Töten des Schlachttiers sowohl aus Gründen der Sicherheit des Schlachthofpersonals als auch aus Gründen der möglichst schonenden Schlachttierbehandlung gewünscht wird.

Bei dem bisher gängigen Betäuben von großen Schlachttieren, insbesondere Rindern, durch Bolzenschluss wird großer plötzlicher Druck auf das Gehirn des Schlachttiers ausgeübt, und es besteht die Gefahr, dass eine gewisse Menge der Gehirnmasse in den Rückenmarkskanal des Schlachttiers gedrückt wird. Es ist bekannt, dass zur Zeit ein gewisser Teil der Rinder von der Krankheit BSE (Bovine, Sklerosierende Encephalopathie) heimgesucht wird, und obwohl die geschilderte Verlagerung eines kleinen Teils von Gehirnmasse in den Rückenmarks-kanal keine Gefahr für das außerhalb des Rückmarkskanals befindliche Fleisch darstellt, ist durch die elektrische Betäubung ein Weg aufgezeigt, wie man eine Verlagerung von Teilen der Gehirnmasse aus dem für das Gehirn vorgesehenen Hohlraum im Schlachttierschädel völlig vermeiden und damit eine noch höhergradige Sicherheit erreichen kann. Die elektrische Betäubung, insbesondere als Kombination von Hirnbetäubung und Herzbetäubung, hat außerdem den Vorteil, dass die mit dem Betäuben einhergehende Kontraktion praktisch aller Muskeln des Schlachttiers sich allmählicher aufbaut als bei der schlagartigen Bolzenschussmethode. Das Töten des Schlachttiers zu einem Zeitpunkt, zu dem noch der Betäubungsstrom, vorzugsweise der Herzbetäubungsstrom der kombinierten Hirnbetäubung/Herzbetäubung, fließt, hat den ganz wesentlichen Vorteil, dass zu demjenigen Zeitpunkt, zu dem wegen Beendigung des Fließens des Betäubungsstroms sich die Muskeln des Schlachttiers wieder entspannen, schon wegen des Öffnens eines Blutgefäßes ein Großteil des Drucks in den Gefäßen (der insbesondere durch die vorherige Muskelkontraktion erzeugt worden ist) abgebaut ist; deshalb haben die kleinen Blutgefäße entscheidend weniger Anlass zum Platzen. Schließlich wird besonders darauf hingewiesen, dass das Betäuben mittels Bolzenschuss eine vom Menschen durchzuführende und seelisch belastende Arbeit ist, während die erfindungsgemäße elektrische Betäubung weitgehend mechanisiert wird und automatisiert ablaufen kann.

Im bisherigen Text ist mehrfach von Wegheben des betäubten und ggf. getöteten Schlachttiers gesprochen worden. In den meisten Fällen wird zu diesem Zweck an einem Hinterfuß des Schlachttiers eine sogenannte Schlingkette (die sich beim anschließenden Aufbringen von Zug eng um den Hinterfuß zusammenzieht) angebracht und anschließend das betreffende Schlachttier vorzugsweise mittels einer Aufzugswinde oder vorzugsweise mittels eines sogenannten Elevators (Förderer nach schräg oben) so weit angehoben und dort an die Bahn eines Förderers abgegeben, dass das Schlachttier frei mit dem Kopf nach unten hängt und entbluten kann.

Die Erfindung und bevorzugte Ausgestaltungen der Erfindung werden nachfolgend anhand eines schematisiert zeichnerisch dargestellten Ausführungsbeispiels noch näher erläutert. Es zeigt:
Fig.1 eine teilweise geschnittene und durch Weglassung von Teilen geöffente Seitenansicht einer Betäubungsbox;
Fig. 2 eine Vorderansicht der Betäubungsbox von Fig. 1 gemäß Pfeil II in Fig. 1, und zwar im aufrechten Zustand;
Fig. 3 eine Frontansicht der Betäubungsbox von Fig. 1 in der Blickrichtung wie Fig. 2, und zwar im liegenden Zustand;
Fig. 4 eine Seitenansicht, in der Blickrichtung der Fig. 1, der in Fig. 1 hinteren, ersten Seitenwand der Betäubungsbox;
Fig. 5 eine Einzelheit der Betäubungsbox, an der in Fig. 2 mit V bezeichneten Stelle, und zwar in Frontansicht mit der Blickrichtung der Fig. 2.

Im folgenden wird die "Betäubungsbox für große Schlachttiere, insbesondere Rinder" der Kürze halber als "Box" bezeichnet. Es wird nur von Rindern gesprochen, wiewohl hier betont wird, dass die Box in ganz analoger Weise für andere große Schlachttiere, wie Pferde, Kamele und dergleichen, brauchbar ist.

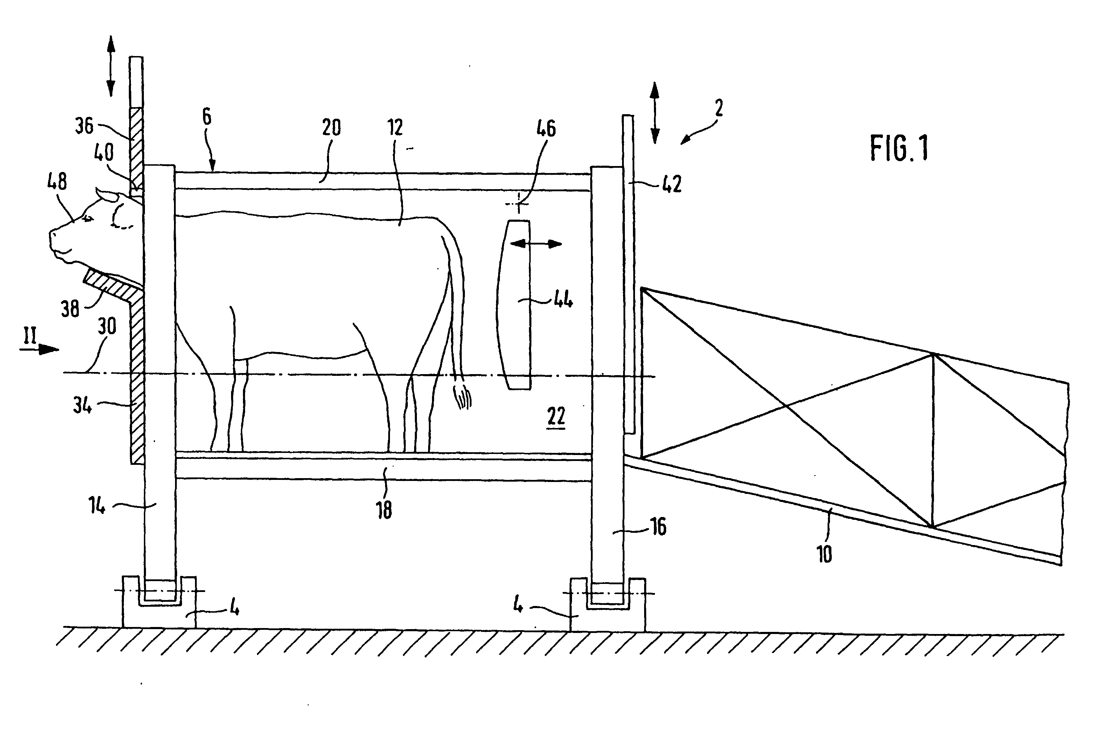

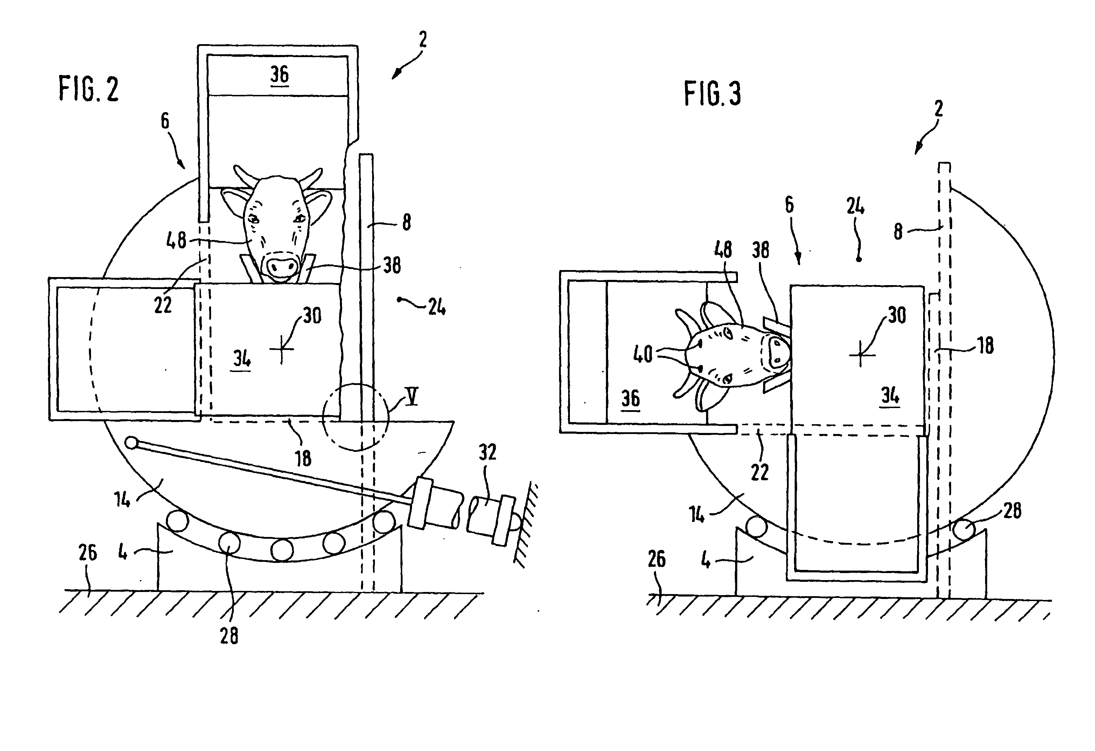

Die Box 2 weist als Hauptbestandteil eine Basis 4, ein Tieraufnahmemodul 6 und eine stationäre zweite Seitenwand 8 auf, welche in den Figuren 2 und 3 zu sehen ist, aber in Fig. 1 weggelasen ist, um einen freien Einblick in das Tieraufnahmemodul 6 zu gewähren. Außerdem erkennt man einen Zutreibgang 10, über den zu betäubende Rinder 12 dem in Fig. 1 rechten, hinteren Ende des Tieraufnahmemoduls 6 zugetrieben werden können. Das Tieraufnahmemodul wird von jetzt an der Kürze halber einfach als "Modul 6" bezeichnet.

Das Modul 6 besteht im wesentlichen aus einer vorderen, vertikalen Tragplatte 14, einer hinteren vertikalen Tragplatte 16, einem sich horizontal zwischen den zwei Tragplatten 14, 16 erstreckenden Boden 18, zwei oder mehr oberen Stäben 20, die sich zwischen den zwei Tragplatten 14, 16 erstrecken, einer ersten Seitenwand 22, die sich in Fig. 1 auf der dem Betrachter entfernteren Seite des Moduls 6 befindet und sich zwischen den beiden Tragplatten 14 und 16 erstreckt, und weiteren ergänzenden Einrichtungen für bestimmte Funktionen.

In den Figuren 2 und 3 erkennt man, dass die vordere Tragplatte 14 im wesentlichen die Gestalt eines Kreises hat, bei dem eine im wesentlichen sektorförmige Aussparung 24 sozusagen kurz vor in 12 Uhr- bis kurz nach 3 Uhr-Position vorhanden ist. Die hintere Tragplatte 16 hat im wesentlichen die gleiche geometrische Form. Es wird allerdings betont, dass die beschriebene "Kreisform mit quasi-sektorartiger Ausnehmung" keineswegs funktionsnotwendig ist. Aus der weiteren Beschreibung wird deutlich werden, dass es allerdings eine sehr praktische Ausführungsform ist, wenn mindestens ein Teil des Randes sowohl der vorderen Tragplatte 14 als auch der hinteren Tragplatte 16 kreisbogenförmig ist. Bei der vorderen Tragplatte 14 könnte die Ausnehmung auch weggelassen sein.

Besonders deutlich in Fig. 2 erkennt man, dass die Basis 4 der Box 2 auf dem Schlachthofboden 26 befestigt ist und an ihrer Oberseite die Form eines konkaven Kreisbogenstücks hat. Dort sind mit umfangsmäßigem Abstand mehrere Rollen 28 drehbar gelagert. Auf diesen Rollen 28 ruht die vordere Tragplatte 14. Der soeben beschriebene, vordere Teil der Basis 4 ist ganz analog auch als hinterer Teil der Basis 4 vorgesehen zum Tragen der hinteren Tragplatte 16. Die geometrischen Verhältnisse sind so, dass eine Drehbewegung des Moduls 6 um eine Längsachse 30 möglich ist, die sich beim dargestellten Ausführungsbeispiel ein Stück oberhalb des Bodens 18 und - in der Vorderansicht der Fig. 2 - im wesentlichen in der Mitte zwischen der linken Seite und der rechten Seite des Moduls 6 befindet. Zum Drehen des Moduls 6 um die Achse 30, ausgehend von dem aufrechten Zustand des Moduls 6 gemäß Fig. 2 zu dem liegenden Zustand des Moduls 6 in Fig. 3 um 90° entgegen dem Uhrzeigersinn in Figuren 2 und 3, ist eine hydraulische Zylinder-Kolben-Einheit 32 vorgesehen. Andere Arten des Antriebs, u.B. elektrisch, sind möglich. Man sieht auch, dass die Erstreckungsebene der vorderen Tragplatte 14 bzw. der hinteren Tragplatte 16 rechtwinklig zu der Achse 30 ist.

An der Vorderseite der vorderen Tragplatte 14 sind an dieser ein unterer Kopfhalter 34 und ein oberer Kopfhalter 36 montiert. Der untere Kopfhalter 34 trägt an seinem in Fig. 1 und Fig. 2 oberen Ende ein von rechts unten schräg nach links oben verlaufendes Auflageelement 38 für das Kinn bzw. den vorderen Beginn des Halses des zu betäubenden Rinds 12. Der obere Kopfhalter 36 beinhaltet - in der Blickrichtung der Fig. 2 nebeneinander - zwei Kopfelektroden 40, wie in Fig. 1 mit unterbrochenen Linien eingezeichnet. Es versteht sich, dass die Kopfelektroden 40 so in den oberen Kopfhalter 36 eingebaut sind, dass sie nach unten hin frei liegende Polflächen darbieten. Das Auflageelement 38 könnte auch fehlen; in diesem Fall würde das Kinn bzw. der vordere Beginn des Halses des Rinds 12 direkt oben auf dem restlichen unteren Kopfhalter 34 aufliegen.

An der hinteren Tragplatte 16 ist eine Tür 42 vorgesehen, die mittels einer nicht eingezeichneten, hydraulischen Zylinder-Kolben-Einheit translatorisch zwischen einer oberen Offenstellung und einer unteren Schließstellung bewegbar ist. Außerdem erkennt man in Fig. 1 ein Drückelement 44, welches plattenartig oder flach-kissenartig ausgebildet ist und den Innenquerschnitt des Moduls 6 zu einem großen Teil ausfüllt. Das Drückelement 44 ist z.B. an den Stäben 20 in Längsrichtung des Moduls 6 geführt und lässt sich mittels einer nicht eingezeichneten, hydraulischen Zylinder-Kolben-Einheit nach links und nach rechts in Fig. 1 verschieben. Außerdem lässt sich das Drückelement 44 mechanisiert um eine Querachse 46 im Vergleich zur gezeichneten, unteren Betriebsposition um 90° gegen den Uhrzeigersinn nach oben schwenken.

Wenn ein neues Rind 12 in das Modul 6 gebracht werden soll, wird zuvor der untere Kopfhalter 34 mit seinem Auflageelement 38 in die Arbeitsposition gebracht (Genaueres weiter unten), wird die Tür 42 in die obere Position gebracht und wird das Drückelement 44 in die nach oben geschwenkte Position gebracht. In diesem Zustand ist der Zugang für das als nächstes zu betäubende Rind 12 in das Innere des Moduls vom Zutreibgang 10 her frei, wobei die beschriebene sektorartige Ausnehmung 24 an der hinteren Tragplatte 16 dafür sorgt, dass die hintere Tragplatte 16 nicht im Weg ist. Das Rind 12 kann auf den Boden 18 laufen. Jetzt wird das Drückelement 44 in die gezeichnete Arbeitsstellung abgesenkt und langsam nach links in Fig. 1 bewegt. Die Tür 42 wird geschlossen, um nachfolgende Rinder sicher von der Box 2 fernzuhalten. Es wird betont, dass die Tür 42 nicht zwingend ein Bestandteil des Moduls 6 sein muss, sondern dass sie z.B. auch stationär in Fig. 1 rechts von der hinteren Tragplatte 16 nahe dieser vorgesehen sein kann. Das zu betäubende Rind 12 wird mittels des Drückelements 44 so weit in dem Modul 6 nach vorn gedrückt (wobei das Rind 12 normalerweise unter dem sanften Druck von hinten selbst nach vorn läuft), dass die Unterseite des Kinns bzw. der Anfangsbereich des Halses des Rinds 12 auf das Auflageelement 38 kommt, so dass der Kopf 48 des rinds 12 sanft nach oben gehoben wird. Das Auflageelement 38 kann im wesentlichen plattenförmig sein; alternativ ist eine rinnenartige Gestalt, die den Kopf 48 auch noch seitlich hält, möglich.

Anschließend wird der obere Kopfhalter 36 mit seinen zwei Hirnelektroden 40 z.B. mittels einer nicht eingezeichneten hydraulischen Zylinder-Kolben-Einheit in die in Fig. 1 gezeichnete, untere Position abgesenkt, in der die Elektroden 40 gut im Nackenbereich des Rinds 12 anliegen. Dann wird ein Hirnbetäubungsstrom eingeschaltet, wobei 6 bis 8 s Stromdauer, 250 - 400 V Spannung, 2 - 3 A Stromstärke und 50 -400 Hz Frequenz der Wechselspannung typisch sind.

Etwas zeitlich überlappend mit dem Fließen des Hirnbetäubungsstroms oder unmittelbar nach Beendigung des Fließens des Hirnbetäubungsstroms oder in sehr geringem zeitlichen Abstand nach dem Ende des Fließens des Hirnbetäubungsstroms wird ein Herzbetäubungsstrom eingeschaltet. Typische Werte sind 2-6 s Dauer, 100-400 V Spannung, 1-2 A Stromstärke und 50-100 Hz Frequenz der Wechselspannung.

Noch während der Herzbetäubungsstrom fließen, wird das Modul 6 um 90° um die Achse 30 gedreht, wie es dem Übergang von Fig. 2 zu Fig. 3 entspricht. Noch während der Herzbetäubungsstrom fließt, wird dem Rind 12 die Halsschlagader geöffnet, so dass dort dem Rind 12 Blut entzogen wird. Vor dem Öffnen der Halsschlagader kann man den unteren Kopfhalter 34, z.B. translatorisch von rechts nach links in Fig. 2, was translatorisch von oben nach unten in Fig. 3 entspricht, aus seiner bisherigen Position wegfahren, um besseren Zugang zum Hals des Rindes 12 zu haben.

Die in Fig. 1 weggelassene, zweite Seitenwand 8 der Box 2 ist an der Basis 26 befestigt und bleibt bei der beschriebenen Drehung des Moduls 6 vertikal stehen. Die zweite Seitenwand 8 erstreckt sich gleichsam zwischen der vorderen Tragplatte 14 und der hinteren Tragplatte 16, wobei zu jeder der beiden Tragplatten ein schmaler Spalt verbleibt. Wenn das Modul 6 im liegenden Zustand gemäß Fig. 3 ist, liegt das betäubte Rind 12 mit seiner Seite auf der ersten Seitenwand 22; zugleich ist aber das Modul 6 nach oben offen. Der untere Kopfhalter 34 befindet sich in seiner ganz linken (Fig. 2) bzw. ganz unteren Stellung (Fig. 3), der obere Kopfhalter 36 befindet sich in seiner ganz oberen (Fig. 2) bzw. ganz linken Stellung (Fig. 3), und das Drückelement 44 befindet sich in seiner nach oben geschwenkten Stellung. Das betäubte und getötete Rind kann mittels eines Elevators ganz frei nach schräg oben-hinten hin aus dem Modul 6 weggehoben werden. Anschließend wird das Modul 6 zurück in den aufrechten Zustand gedreht und werden die anderen Einrichtungen in den Ausgangszustand zum Zutreiben eines neuen zu betäubenden Rinds 12 gebracht, wie beschrieben.

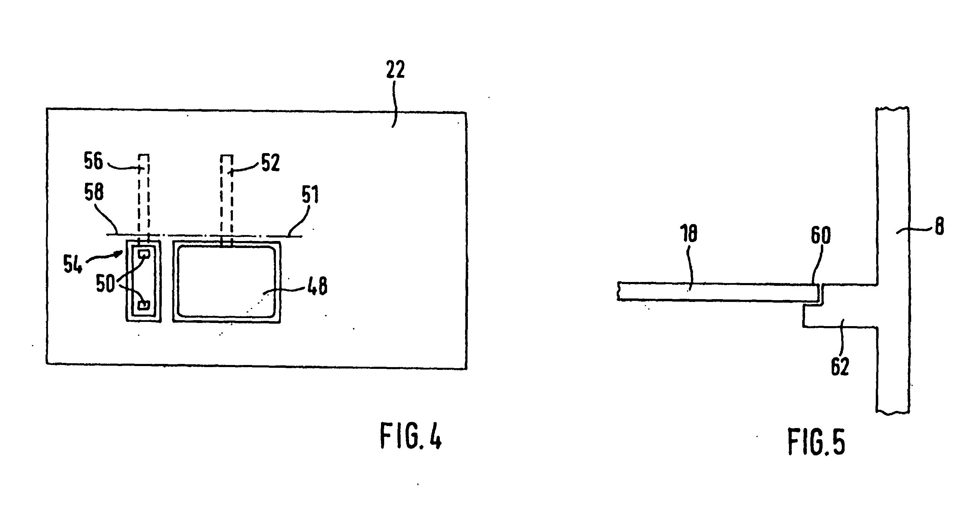

Anhand der Fig. 4 werden nun noch ein Bauchunterstützungselement 48 und ein Paar von Herzelektroden 50 beschrieben. Das Bauchunterstützungselement 48 besitzt einen im wesentlichen plattenförmigen, aber tierfreundlich leicht gewölbt und an den Rändern abgerundeten Berührungsteil, der in Ruheposition in einer Ausnehmung in der ersten Seitenwand 22 positioniert ist. Das Bauchunterstützungselement 48 ist insgesamt um eine Längsachse 51 relativ zu der ersten Seitenwand 22 drehbar, und zu diesem Zweck ist ein in Fig. 4 oberer Endbereich 52 als Hebel ausgebildet, an dem eine nicht eingezeichnete hydraulische Zylinder-Kolben-Einheit angreift.

Ganz analog angeordnet ist ein Tragelement 54 für zwei Herzelektroden 50. Auch hier ist der Aktivbereich in einer entsprechenden Aussparung in der ersten Seitenwand 22 untergebracht; der obere Endbereich dient als Hebel 56 zum Schwenken um eine Längsachse 58 mittels einer nicht eingezeichneten hydraulischen Zylinder-Kolben-Einheit. Die Herzelektroden 50 bieten freie Polflächen dar, die im nach oben geschwenkten Zustand mit dem Brustbereich des Rinds 12 in elektrischem Kontakt kommen. Die Anordnung der Herzelektroden 50 ist so, dass ein zwischen den beiden Herzelektroden 50 durch den Körper des Rinds 12 fließender Strom durch den Herzbereich des Rinds 12 fließt. Man erkennt unschwer, dass es ganz einfach möglich ist, das Bauchunterstützungselement 48 und das Herzelektroden-Tragelement 54 zu einem gemeinsamen Bauteil zusammenzufassen. Alternativ kann man mit nur einer Herzelektrode 50 arbeiten; der Herzbetäubungsstrom fließt dann zwischen dieser einen Herzelektrode 50 und mindestens einer Kopfelektrode 40.

Das Bauchunterstützungselement 48 wird zu einem Zeitpunkt nach oben in Berührung mit der Bauchseite des Rinds 12 geschwenkt, ehe der Hirnbetäubungsstrom eingeschaltet wird. Zum gleichen Zeitpunkt oder etwas später können die beiden Herzelektroden 50 nach oben in Kontakt mit der Brustseite des Rinds 12 geschwenkt werden. Der Herzbetäubungsstrom wird dann zu einem geeigneten, etwas späteren Zeitpunkt eingeschaltet. Vor dem Wegheben des betäubten und getöteten Rinds 12 werden das Bauchunterstützungselement 48 und das Herzelektroden-Tragelement 54 in die erste Seitenwand 22 zurückgeschwenkt.

Anhand der Fig. 5 wird noch ein weiteres Detail genauer beschrieben. Damit der in Fig. 2 rechte Rand 60 des Bodens 18 beim Drehen des Moduls 6 in den liegenden Zustand nicht mit der zweiten Seitenwand 8 kollidiert, endet der Boden 18 ein Stück vor der eigentlichen zweiten Seitenwand 8. In diesem Bereich hat die zweite Seitenwand 8 einen leistenartigen, seitlichen Fortsatz 62, der in Richtung zum Inneren des Moduls 6 vorragt. Wenn sich das Modul 6 in dem aufrechten Zustand gemäß Fig. 2 befindet, liegt der Boden 18 mit einem schmalen Rand 60 auf dem freien Rand des Fortsatzes 62 auf. Aus dieser Lage kann das Modul problemlos in den liegenden Zustand gedreht werden, ohne dass der Rand 60 mit der eigentlichen zweiten Seitenwand 8 kollidiert.

Zur Erleichterung der Arbeit des Schlachthofpersonals beim Anschlingen des betäubten und getöteten Rinds 12 kann man einen - in Fig. 1 rechten - Teilbereich der zweiten Seitenwand 8 als Tür ausbilden, die sich öffnen lässt, wenn man an den Innenraum des Moduls 6 zum Anschlingen des Rinds 12 mehr von der Seite her statt von schräg hinten her herantreten will.

Alle Zylinder-Kolben-Einheiten sind als hydraulisch beschrieben worden. Jede dieser Einheiten kann alternativ auch pneumatisch sein.

## Patentansprüche

1. Betäubungsbox für große Schlachttiere, insbesondere Rinder,
**dadurch gekennzeichnet, dass** sie eine stationäre Basis (4) und ein Tieraufnahmemodul (6) aufweist, welches um eine Längsachse drehbar auf der Basis (4) gelagert ist und - im aufrechten Zustand - einen Boden (18), auf den ein zu betäubendes Schlachttier (12) laufen kann, und eine erste Seitenwand (22) aufweist,
**dadurch gekennzeichnet, dass** eine zweite Seitenwand (8) der Betäubungsbox (2) gesondert von dem Tieraufnahmemodul (6) vorgesehen ist; und dass ein Bauchunterstützungselement (48) vorgesehen ist, welches schwenkend oder translatorisch in Unterstützungsposition bei einem zu betäubenden Schlachttier (12) bringbar ist, um ein Zusammensacken des betäubten Schlachttiers (12) in der Betäubungsbox (2) zu verhindern.

2. Betäubungsbox nach Anspruch 1,
**dadurch gekennzeichnet, dass** ein unterer Kopfhalter (34) zum Abstützen des Schlachttierkopfes (48) von unten her vorgesehen ist;
und dass ein schwenkend oder translatorisch aufwärts und abwärts bewegbarer, oberer Kopfhalter (36) vorgesehen ist, der zwei Elektroden (40) für elektrisches Betäuben beinhaltet.

3. Betäubungsbox nach Anspruch 2,
**dadurch gekennzeichnet, dass** der untere Kopfhalter (34) schwenkend oder translatorisch aufwärts und abwärts oder seitwärts bewegbar ist.

4. Betäubungsbox nach Anspruch 2 oder 3,
**dadurch gekennzeichnet, dass** der untere Kopfhalter (34) und der obere Kopfhalter (36) - in Seitenansicht der Betäubungsbox (2) betrachtet - an einer Stelle vorgesehen sind, die nahe einer Vorderwand (14) der Betäubungsbox (2) ist, so dass beim Betäuben der Kopf (48) des Schlachttiers (12) vorne aus der Betäubungsbox (2) herausragt.

5. Betäubungsbox nach einem der Ansprüche 1 bis 4,
**dadurch gekennzeichnet, dass** eine Herzelektrode oder ein Paar von Herzelektroden (50) vorgesehen ist.

6. Betäubungsbox nach Anspruch 5,
**dadurch gekennzeichnet, dass** die Herzelektrode(n) (50) schwenkend oder translatorisch in Berührung mit einem zu betäubenden Schlachttier (12) bringbar ist (sind).

7. Betäubungsbox nach einem der Ansprüche 1 bis 6,
**dadurch gekennzeichnet, dass** an ihrer Hinterseite eine Tür (42) vorgesehen ist, die schwenkend oder translatorisch zwischen einer Offenstellung und einer Schließstellung bewegbar ist

8. Betäubungsbox nach einem der Ansprüche 1 bis 7,
**dadurch gekennzeichnet, dass** ein Drückelement (44) vorgesehen ist, mit dem von hinten her Druck auf ein zu betäubendes Schlachttier (12) zum ganz nach vom Laufen ausübbar ist.

9. Betäubungsbox nach einem der Ansprüche 1 bis 8,
**dadurch gekennzeichnet, dass** das Tieraufnahmemodul (6) eine vordere Tragplatte (14) und eine hintere Tragplatte (16) aufweist;
dass sich jede der Tragplatten (14, 16) quer zu einer Längsachse (30) der Betäubungsbox (2) erstreckt;
dass jede der Tragplatten (14, 16) mindestens auf einer Teillänge ihres Randes kreisbogenförmig gerundet ist;
und dass mindestens die hintere Tragplatte (42) eine sektorartige Ausnehmung (24) aufweist.

10. Betäubungsbox nach einem der Ansprüche 1 bis 9,
**dadurch gekennzeichnet**, das Bauchunterstützungselement (48) und die Herzelektrode(n) (50) als kombiniertes Bauteil vorgesehen sind.

11. Verfahren zum Betäuben und Töten großer Schlachttiere, insbesondere Rinder, unter Verwendung einer Box (2), die gemäß einem der Ansprüche 5 bis 10 ausgebildet ist,
**dadurch gekennzeichnet,**
**dass** das jeweilige Schlachttier (12) in die Box (2) gebracht wird;
**dass** mittels der zwei Kopfelektroden (40) eine Hirnbetäubung des Schlachttiers (12) mit Strom durchgeführt wird;
**dass** teilweise zeitlich überlappend mit der Hirnbetäubung oder danach mittels einer Herzelektrode (50) und mindestens einer Kopfelektrode (40) oder mittels zwei Herzelektroden (50) eine Herzbetäubung des Schlachttiers (12) mit Strom durchgeführt wird;
**dass** vor dem Beginn der Himbetäubung oder vor dem Beginn der Herzbetäubung das Bauchunterstützungselement (48) in Position gebracht wird;
**dass** vor Beendigung des Stromdurchgangs für die Herzbetäubung oder nach Beendigung des Stromdurchgangs für die Herzbetäubung die Box (2) um eine Längsachse (30) gedreht wird, so dass das Schlachttier (12) auf der ersten Seitenwand (22) der Box liegt;
**dass** dem Schlachttier (12) vor dem Drehen der Box (2) oder nach dem Drehen der Box (2) zum Töten ein Blutgefäß geöffnet wird.

12. Verfahren nach Anspruch 11,
**dadurch gekennzeichnet, dass** das Blutgefäß geöffnet wird, während noch der Herzbetäubungsstrom fließt.

13. Verfahren nach Anspruch 11 oder 12,
**dadurch gekennzeichnet, dass** die zwei Kopfelektroden (40) durch Heranbewegen eines Kopfhalters (36) mit beinhalteten Kopfelektroden (40) in Position gebracht werden.

14. Verfahren nach einem der Ansprüche 11 bis 13,
**dadurch gekennzeichnet, dass** bei der Herzbetäubung mit niedrigerer Stromfrequenz gearbeitet wird als bei der Hirnbetäubung.

15. Verfahren nach einem der Ansprüche 11 bis 14,
**dadurch gekennzeichnet, dass** bei der Herzbetäubung mit niedrigerer Stromstärke gearbeitet wird als bei der Hirnbetäubung.

## Claims

1. A stunning box for large animals to be slaughtered, in particular cattle,
**characterized in that** it comprises a stationary basis (4) and an animal receiving module (6) supported on said basis (4) so as to be rotatable about a longitudinal axis and having - in the upright state - a floor (18) allowing an animal (12) to be stunned to walk thereon, and a first side wall (22),
**characterized in that** there is provided a second side wall (8) of the stunning box (2) separately from said animal receiving module (6);
and **in that** there is provided a belly supporting member (48) which, by pivotal or translational motion, is adapted to be brought into a supporting position at an animal (12) to be stunned so as to prevent collapsing of the stunned animal (12) in the stunning box (2).

2. A stunning box according to claim 1,
**characterized in that** there is provided a lower head holder (34) for supporting the animal head (48) from the lower side;
and **in that** there is provided an upper head holder (36) which is adapted to be moved upwards and downwards by pivotal or translational motion and which includes two electrodes (40) for electric stunning.

3. A stunning box according to claim 2,
**characterized in that** the lower head holder (34) is adapted to be moved upwards and downwards or sidewards by pivotal or translational motion.

4. A stunning box according to claim 2 or 3,
**characterized in that** the lower head holder (34) and the upper head holder (36) - as seen in a side view of the stunning box (2) - are provided at a location close to a front wall (14) of the stunning box (2) such that, during stunning, the head (48) of the animal (12) projects from the front side of the stunning box (2).

5. A stunning box according to any of claims 1 to 4,
**characterized in that** a heart electrode of a pair of heart electrodes (50) is provided.

6. A stunning box according to claim 5,
**characterized in that** the heart electrode(s) (50) is (are) adapted to be contacted, by pivotal or translational motion, with an animal (12) to be stunned.

7. A stunning box according to any of claims 1 to 6,
**characterized in that** it has a door (42) on its rear side, which is movable between an open position and a closed position by pivotal or translational motion.

8. A stunning box according to any of claims 1 to 7,
**characterized in that** there is provided a pushing member (44) by means of which pressure can be applied to an animal to be stunned (12) from the back side to cause the same to walk to the very front.

9. A stunning box according to any of claims 1 to 8,
**characterized in that** the animal receiving module (6) comprises a front supporting plate (14) and a rear supporting plate (16);
that each of the supporting plates (14, 16) extends transversely of a longitudinal axis (30) of the stunning box (2);
that each of the supporting plates (14, 16) has an arcuate shape at least over part of the length of its edge;
and **in that** at least the rear supporting plate (42) has a sector-like recess (24).

10. A stunning box according to any of claims 1 to 9,
**characterized in that** said belly supporting member (48) and said heart electrode(s) (50) are in the form of a combined component part.

11. A method of stunning and killing large animals to be slaughtered, in particular cattle, using a box (2) according to any of claims 5 to 10,
**characterized in**
**that** the respective animal (2) is brought into said box (2);
**that** stunning of the brain of the animal (12) is carried out with current using the two head electrodes (40);
**that**, partially in time-overlapping manner with said brain stunning or thereafter, stunning of the heart of the animal (12) is carried out with current using a heart electrode (50) and at least one head electrode (40) or using two heart electrodes (50);
**that**, prior to the beginning of said brain stunning or prior to beginning of said heart stunning, the belly supporting member (48) is brought into position;
**that** before termination of the current passage for heart stunning or after termination of the current passage for heart stunning, the box (2) is rotated about a longitudinal axis (30) so that the animal (12) lies on the first side wall (22) of the box;
**that** a blood vessel of the animal (12) is opened for killing before rotation of the box (2) or after rotation of the box (2).

12. A method according to claim 11,
**characterized in that** the blood vessel is opened while the heart stunning current is still flowing.

13. A method according to claim 11 or 12,
**characterized in that** the two head electrodes (40) are brought into position by advancing a head holder (36) with head electrodes (40) contained therein.

14. A method according to any of claims 11 to 13,
**characterized in that** a lower current frequency is utilized for heart stunning than for brain stunning.

15. A method according to any of claims 11 to 14,
**characterized in that** a lower current intensity is utilized for heart stunning than for brain stunning.

## Revendications

1. Box d'anesthésie pour animaux de grande taille, plus particulièrement des bovins, **caractérisé en ce qu'**il comporte une base fixe (4) et un module de réception de l'animal (6), qui est monté rotatif autour d'un axe longitudinal sur la base (4) et qui comporte - en position verticale - un fond (18), sur lequel peut se déplacer un animal (12) à anesthésier, et une première paroi latérale (22),
**caractérisé en ce qu'**il est prévu une deuxième paroi latérale (8) dans le box d'anesthésie (2), séparée du module de réception de l'animal (6) ; et **en ce qu'**il est prévu un élément de support ventral (48) destiné à être amené par pivotement ou translation dans la position de support d'un animal (12) à anesthésier, en vue d'empêcher l'animal (12) anesthésié de s'effondrer dans le box d'anesthésie (2).

2. Box d'anesthésie selon la revendication 1, **caractérisé en ce qu'**il est prévu un support de tête inférieur (34) destiné à supporter par le bas la tête (48) de l'animal ; et **en ce qu'**il est prévu un support de tête supérieur (36) mobile vers le haut et le bas par pivotement ou translation, qui comporte deux électrodes (40) pour une anesthésie par voie électrique.

3. Box d'anesthésie selon la revendication 2, **caractérisé en ce que** le support de tête inférieur (34) est mobile par pivotement ou translation vers le haut et le bas ou vers le côté.

4. Box d'anesthésie selon la revendication 2 ou 3, **caractérisé en ce que** - par référence à une vue de côté du box d'anesthésie (2) - le support de tête inférieur (34) et le support de tête supérieur (36) sont prévus à un emplacement à proximité d'une paroi avant (14) du box d'anesthésie (2), de telle sorte que, au cours de l'anesthésie, la tête (48) de l'animal (12) s'avance hors du box d'anesthésie (2).

5. Box d'anesthésie selon l'une quelconque des revendications 1 à 4,
**caractérisé en ce qu'**il est prévu une électrode de coeur ou une paire d'électrodes de coeur.

6. Box d'anesthésie selon la revendication 5, **caractérisé en ce que** la ou les électrode(s) de coeur (50) est (sont) destinée(s) à être amenée(s) par pivotement ou translation en contact avec l'animal (12) à anesthésier.

7. Box d'anesthésie selon l'une quelconque des revendications 1 à 6,
**caractérisé en ce que** sur le côté arrière de celui-ci est prévue une porte (42) qui peut être amenée par pivotement ou translation entre une position d'ouverture et une position de fermeture.

8. Box d'anesthésie selon l'une quelconque des revendications 1 à 7,
**caractérisé en ce qu'**il est prévu un élément de pression (44) destiné à exercer une pression par l'arrière sur un animal (12) à anesthésier en vue de l'inciter à se déplacer jusque tout à fait à l'avant.

9. Box d'anesthésie selon l'une quelconque des revendications 1 à 8,
**caractérisé en ce que** le module de réception de l'animal (6) comporte une plaque de support avant (14) et une plaque de support arrière (16) ; **en ce que** chacune des plaques de support (14, 16) s'étend transversalement à un axe longitudinal (30) du box d'anesthésie (2) ; **en ce que** chacune des plaques de support (14, 16) est arrondie en forme d'arc de cercle au moins sur une partie de la longueur de son bord ; et **en ce qu'**au moins la plaque de support arrière (14) comporte un évidement (24) sectoriel.

10. Box d'anesthésie selon l'une quelconque des revendications 1 à 9,
**caractérisé en ce que** l'élément de support ventral (48) et la ou les électrode(s) de coeur (50) sont prévus sous forme de pièce combinée.

11. Procédé d'anesthésie et d'abattage d'animaux de grande taille, plus particulièrement des bovins, moyennant l'utilisation d'un box (2) réalisé selon l'une quelconque des revendications 5 à 10,
**caractérisé en ce que** l'animal (12) concerné est amené dans le box (2) ; **en ce que** les deux électrodes de tête (40) permettent d'anesthésier le cerveau de l'animal (12) par l'admission de courant ; **en ce que**, pendant une partie de la durée de l'anesthésie du cerveau ou après celle-ci, une électrode de coeur (50) et au moins une électrode de tête (40) ou deux électrodes de coeur (50) permettent d'anesthésier le coeur de l'animal (12) par admission de courant ; **en ce que**, avant le début de l'anesthésie du cerveau ou avant le début de l'anesthésie du coeur, l'élément de support ventral (48) est amené dans une position ; **en ce que**, avant la fin du passage du courant pour l'anesthésie du coeur ou après la fin du passage du courant pour l'anesthésie du coeur, le box (2) est entraîné en rotation autour de l'axe longitudinal (30) de manière à faire reposer l'animal (12) sur la première paroi latérale (22) du boîtier ; **en ce que**, avant la rotation du box (2) ou après la rotation du box (2), on ouvre une veine de l'animal (12) pour l'abattre.

12. Procédé selon la revendication 11, **caractérisé en ce que** la veine est ouverte encore avant le passage du courant anesthésiant le coeur.

13. Procédé selon la revendication 11 ou 12, **caractérisé en ce que** les deux électrodes de tête (40) sont amenées en position par la mise en place d'un support de tête (36) contenant les électrodes de tête (40).

14. Procédé selon l'une quelconque des revendications 11 à 13,
**caractérisé en ce que** pour l'anesthésie du coeur on travaille avec une fréquence de courant inférieure à celle appliquée pour l'anesthésie du cerveau.

15. Procédé selon l'une quelconque des revendications 11 à 14,
**caractérisé en ce que** pour l'anesthésie du coeur on travaille avec une intensité de courant inférieure à celle appliquée pour l'anesthésie du cerveau.
